# EUROPEAN PATENT SPECIFICATION

(11) **EP 1 606 906 B1**
(45) Date of publication and mention of the grant of the patent: **26.07.2006**
(21) Application number: 04720623.0
(22) Date of filing: 15.03.2004
(51) Int. Cl.: H04L 12/24

(54) **NOTIFICATIONS IN A TELECOMMUNICATIONS NETWORK**
MELDUNGEN IN EINEM TELEKOMMUNIKATIONSNETZWERK
NOTIFICATIONS DANS UN RESEAU DE TELECOMMUNICATION

(30) Priority: 19.03.2003 GB 0306237
(43) Date of publication of application: 21.12.2005
(73) Proprietor: Marconi Intellectual Property (Ringfence) Inc., Warrendale, Pennsylvania 15086 (US)
(72) Inventor: MACKEY, Michael, Dublin 8 (IE); FLYNN, Martin, Dublin 14 (IE); CAUTLEY, Peter, Co. Wicklow (IE)
(74) Representative: Stasiewski, Piotr Grzegorz
(86) International application number: PCT/EP2004/002837
(87) International publication number: WO 2004/084489

(56) References cited:
- WO-A-00/77964
- MARCONI COMMUNICATIONS SOFTWARE SYSTEMS: "ServiceOn Access SNMP Management - Programming Manual" July 2001 (2001-07), MARCONI , BACKNANG , XP002290148 page 40 - page 43
- MARCONI COMMUNICATIONS SOFTWARE SYSTEMS: "ServiceOn Access Alarm Management" July 2001 (2001-07), MARCONI , BACKNANG, GERMANY , XP002290149 Section "Alarm List Entry structure" on page 18 - page 21 Paragraph "Element (window section 3)" on page 35

## Description

This invention relates to notifications in a telecommunications network, and a method of identifying an object of the network which has resulted in the generation of the notification.

Telecommunications networks are made up of many network elements (NEs), such as nodes, which comprise various components, for example boards, network modules, ports, links, connections, etc. The NEs and the components of NEs are often referred to as objects of the telecommunications network. A network management system (NMS) is generally used to manage the operation of the network. This performs many functions, including the management of some or all of the objects in the network. NEs send notifications to the NMS to inform the NMS of any changes in the status of the NE or a component of the NE, i.e. the NEs send notifications to the NMS to inform it of changes in the status of objects of the network.

Recent developments in telecommunications networks to comply with the Remote (network) Monitoring (RMON) Standard, RFC 2819, have resulted in the introduction of monitoring systems into NEs of telecommunications networks. Such systems allow monitoring of various variables related to a NE or a component of a NE, i.e. various variables relating to an object of the network. For example, switches which monitor their usage of internal central processing unit capacity, and connections which monitor their bandwidth usage, have been introduced into telecommunications networks. This new functionality further allows the setting of thresholds for one or more of the variables, and, if a threshold is crossed, a threshold crossing alert (TCA) and a TCA notification can be generated. However, such TCA notifications do not comprise identification of the object of the network to which the variable which has crossed the threshold relates. This can present problems when action has to be taken concerning the threshold crossing, as, for example, a manager of the network, on receiving details of the TCA, will not be able to identify the object of the network to which it relates.

Document WO0077964 discloses a performance management table in the network element, storing the threshold values for the monitored variables. The table comprises TCA profile indices, PM counter identifiers and threshold values. The notification reporting the TCA incudes the ID of the instances of the PM Counter managed entity reporting the TCA and their actual values.

According to a first aspect of the invention, in a telecommunications network in which a threshold crossing alert (TCA) notification is generated when a threshold set for a variable related to an object of a network element (NE) of the network is crossed, there is provided a method of identifying the object, comprising: creating an entry for the variable in an alarm table of the NE, the entry comprising information concerning the identity of the NE and information concerning the position of the entry in the alarm table, constructing a managed object identity (MOID) of the object and storing this in the alarm table entry, using the alarm table entry to generate the TCA notification when the threshold is crossed, the TCA notification comprising the information concerning the identity of the NE and the information concerning the position of the entry in the alarm table, interrogating the TCA notification to read the information concerning the identity of the NE and the information concerning the position of the entry in the alarm table, accessing the alarm table entry using the information read from the TCA notification, and identifying the object by reading the MOID of the object from the alarm table entry.

Identifying the object of the telecommunications network to which the variable which has crossed the threshold relates can therefore be achieved, and action can be taken concerning this, if necessary. Thus any TCA notification generated when a variable crosses a threshold can be matched to the object to which the variable relates, i.e. can be matched to the object which has resulted in the generation of the TCA notification. The telecommunications network may comprise many NEs, each of which has an alarm table. A TCA notification will be generated when a variable related to an object of a particular NE crosses a threshold. As the TCA notification comprises the identity of the NE and the identity of the entry for the variable in the alarm table of the NE, this allows the alarm table of the particular NE and the entry for the variable in the alarm table to be accessed, giving the MOID of the object to which the variable relates.

Creating the entry for the variable in the alarm table may be carried out in accordance with the RMON Standard RFC 2819. Creating the entry for the variable in the alarm table may be carried out by a network management system (NMS) of the telecommunications network. The alarm table entry may comprise information concerning the identity of the variable. The alarm table entry may comprise information concerning the threshold set for the variable. This may comprise a rising threshold value, for which a rising TCA notification is generated if the variable rises above the rising threshold value. Additionally or alternatively, this may comprise a falling threshold value, for which a falling TCA notification is generated if the variable falls below the falling threshold value. The rising threshold value may be greater than or equal to the falling threshold value. The alarm table entry may comprise information concerning one or more events, which are executed when the variable crosses the threshold. This may comprise a pointer to one or more entries for the variable in an event table of the NE, which detail the one or more events. The alarm table entry may comprise information concerning the identity of the entity (e.g. a network user or manager), which has created the alarm table entry. The alarm table entry may comprise information concerning how often the variable should be monitored. The alarm table entry may comprise information indicating that the value of the variable is to be monitored. The alarm table entry may comprise information indicating that changes in the value of the variable are to be monitored.

The method may comprise creating one or more entries for the variable in an event table of the NE. This may be carried out by a network management system (NMS) of the telecommunications network. The or each event table entry may comprise information concerning one or more events which are executed when the variable crosses the threshold. The one or more events include generation of a TCA notification, and may also include, for example, making an entry in a log table of the NE concerning the threshold crossing. The or each event table entry may comprise information concerning the identity of the entity (e.g. a network user or manager) which has created the event table entry.

Constructing the MOID of the object may comprise creating the MOID using a network management system (NMS) of the telecommunications network. This may comprise the NMS using information concerning the object and the variable held in the NMS. This may comprise storing the MOID in one or more tables of a database of the NMS. Constructing the MOID of the object may be carried out when the NMS discovers the NE which comprises the object. A MOID created by the NMS may be determ inistic, i.e. if a NE is removed from the network, and subsequently reinserted into the network, a MOID created for an object of the NE when the NE is first inserted into the network will be the same as a MOID created for the object when the NE is reinserted into the network. The MOID of the object may be independent of the NMS used to create the MOID, i.e. a MOID of an object created by a first NMS of the network will be the same as a MOID for the object created by a second NMS of the network.

Storing the MOID of the object in the alarm table entry may comprise copying the MOID from a table of a database of a NMS of the network used to create the MOID. The MOID of the object may be stored in an alarm owner field of the alarm table entry. The alarm owner field may comprise a free format text field, which allows data to be added to existing data in the field. The alarm owner field may normally comprise information concerning the identity of the entity (e.g. a network user or manager), which has created the alarm table entry, and the MOID of the object may be added to this information. Information concerning the identity of the variable which has crossed the threshold may also be added to the alarm owner field of the alarm table entry.

Generation of the TCA notification using the alarm table entry may be carried out in accordance with the RMON Standard RFC 2819. The TCA notification may comprise a time stamp. The TCA notification may comprise one or more variables or variable bindings (varbinds). The varbinds may comprise an alarm index i.e. the index or position of the entry for the variable in the alarm table, an alarm variable i.e. the identity of the variable which has crossed the threshold, an alarm value i.e. the value of the variable that has crossed the threshold, an alarm threshold i.e. the value to which the threshold was set, and an alarm sample type i.e. whether or not the value of the variable is an absolute or delta value. The TCA notification may comprise information identifying whether it is a notification generated when a rising threshold value has been crossed or a notification generated when a falling threshold value has been crossed.

Interrogating the TCA notification may be carried out by a network management system (NMS) of the telecommunications network. This may be carried out using the simple network management protocol (SNMP). Accessing the alarm table entry may be carried out by a network management system (NMS) of the telecommunications network. This may be carried out using the simple network management protocol (SNMP). Reading the MOID of the object from the alarm table entry may be carried out by a network management system (NMS) of the telecommunications network. This may be carried out using the simple network management protocol (SNMP).

The method may further comprise updating the TCA notification to contain the MOID of the object. This may be carried out by a network management system (NMS) of the telecommunications network. The method may further comprise updating the TCA notification to contain the identity of the variable which has crossed the threshold. This may be carried out by a network management system (NMS) of the telecommunications network. The method may further comprise generating a new TCA notification. This may be carried out by a network management system (NMS) of the telecommunications network. The new TCA notification may comprise the information contained in the original TCA notification plus the MOID of the object. The new TCA notification may further comprise the identity of the variable which has crossed the threshold.

The method may further comprise generating an alarm notification using the TCA notification. This may be carried out by a network management system (NMS) of the telecommunications network. The alarm notification may comprise the information contained in the TCA notification, the MOID of the object and information retrieved from a database of the NMS. The alarm notification may comprise information concerning an identity assigned to the alarm notification; a name assigned to the object; the MOID of the object; an identity assigned to the TCA notification; and a code regarding the cause of the threshold crossing. The alarm notification may comprise an active description and active details when the TCA notification is generated when a rising threshold value is crossed, or a clear description and details when the TCA notification is generated when a falling threshold value is crossed. The active and clear details may comprise the varbinds of the TCA notification.

The variable may be associated with a physical or logical peripheral of the NE, for example a connection. The variable may be a counter variable or a gauge variable.

The object of the telecommunications network may comprise a NE, such as a node or a switch, or a component of a NE, such as a board, or a network module (netmod), or an interface, or a port, or a link, or a connection, or a temperature sensor, or a fan bank, or a power supply.

The MOID of an object may comprise a unique identity of the object. The MOID may comprise a data string. This may be a hierarchical data string. The hierarchical data string may start with identification of the NE comprising the object. For example, a MOID for a circuit may comprise identification of the circuit, identification of the board comprising the circuit, and identification of the NE comprising the board.

The NE may comprise one or more management information bases (MIB or MIBS). The NE may comprise a RMON MIB, i.e. a MIB whose structure and content is dictated by the RMON Standard RFC 2819. The RMON MIB may comprise one or more tables, for example the alarm table, an event table and a log table.

The telecommunications network may comprise a NMS. The NMS may comprise software run on a computer system. The telecommunications network may comprise a plurality of NEs, which may be linked to the NMS and may communicate with the NMS via the SNMP using the transmission control protocol over the Internet protocol (TCP/IP). The NMS may perform a plurality of functions. The NMS may manage some or all of the objects in the network. The NMS may create the entry for the variable in the alarm table of the NE. The NMS may create one or more entries for the variable in an event table of the NE. The NMS may construct the MOID of the object. The NMS may store the MOID of the object in the alarm table entry. The NMS may receive the TCA notification. This may be received using the SNMP. This may be received by a fault manager module of the NMS. The fault manager module may add the TCA notification to a database of the NMS. The NMS may interrogate the TCA notification. The NMS may access the alarm table entry. The NMS may read the MOID of the object from the alarm table entry. The NMS may update the TCA notification. The NMS may generate a new TCA notification. The NMS may generate an alarm notification using the TCA notification. The NMS may display the alarm notification, e.g. to a user or a manager of the telecommunications network. The alarm notification may be displayed using a fault graphical user interface (GUI) module of the NMS.

According to a second aspect of the invention, in a telecommunications network in which a threshold crossing alert (TCA) notification is generated when a threshold set for a variable related to an object of a network element (NE) of the network is crossed, there is provided a computer program product for identifying the object, comprising: computer readable program means for creating an entry for the variable in an alarm table of the NE, the entry comprising information concerning the identity of the NE and information concerning the position of the entry in the alarm table, computer readable program means for constructing a managed object identity (MOID) of the object and storing this in the alarm table entry, computer readable program means for generating the TCA notification when the threshold is crossed using the alarm table entry, the TCA notification comprising the information concerning the identity of the NE and the information concerning the position of the entry in the alarm table, computer readable program means for interrogating the TCA notification to read the information concerning the identity of the NE and the information concerning the position of the entry in the alarm table, computer readable program means for accessing the alarm table entry using the information read from the TCA notification, and computer readable program means for identifying the object by reading the MOID of the object from the alarm table entry.

The computer program product may comprise a NMS of the telecommunications network.

According to a third aspect of the invention, there is provided a computer system whose operation is directed by the computer program product of the second aspect of the invention.

According to a fourth aspect of the invention, there is provided a program storage device readable by a machine and encoding a program of instructions for executing the method according to the first aspect of the invention.

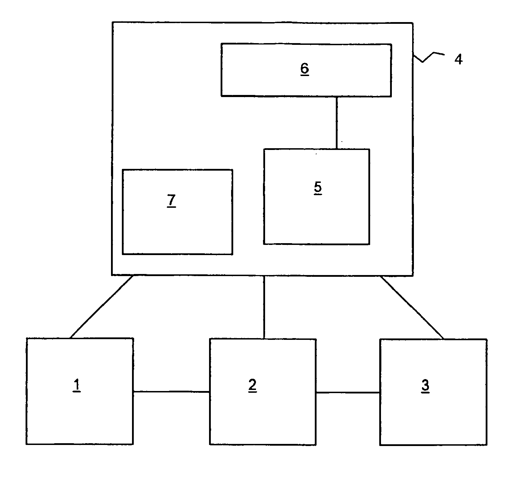

An embodiment of the invention will now be described by way of example only, with reference to the accompanying drawing, which is a schematic representation of a telecommunications network in which the method of the first aspect of the invention is carried out.

The drawing shows a telecommunications network which comprises NEs 1, 2 and 3, and a NMS 4. The NEs 1 to 3 each comprise a separate node. The NMS 4 comprises software run on a computer system, and has a fault manager module 5, a fault GUI module 6, and a real time performance monitoring module PMRT 7. The NEs 1 to 3 are linked to each other and to the NMS 4 as shown. The NEs 1 to 3 communicate with each other, and with the NMS, the latter taking place using SNMP over TCP/IP. Each NE 1 to 3 forms an object of the telecommunications network, and comprises various components, e.g. interfaces, which also form objects of the network. There are various variables, for which a threshold can be set, related to each object. For example, the NE 1 may comprise an object in the form of an interface (not shown). A variable related to the interface may comprise the amount of processing capacity of the interface being used, and a threshold comprising a rising threshold value of 90% may be set for this variable.

If a manager of the network wishes to monitor the processing capacity variable of the interface of the NE 1, he uses the real time performance monitoring module PMRT 7 of the NMS 4 to instruct the NE 1 to monitor this variable by creating an entry for the variable in its alarm table. The network manager then uses the NMS 4 to store the following information in the alarm table entry of the NE 1: information concerning the identity of the NE 1; information concerning the position of the entry in the alarm table; information concerning the identity of the variable; information concerning the threshold set for the variable; information concerning one or more events which are executed when the threshold is crossed comprising a pointer to an entry for the variable in an event table of the NE 1; information concerning the identity of the entity (i.e. the network manager) which has created the alarm table entry; information concerning how often the variable should be monitored; and information indicating that the value of the variable is to be monitored. The network manager then uses the NMS 4 to create the entry for the variable in the event table of the NE 1. The event table entry comprises information concerning the events which are executed when the variable crosses the threshold, i.e. generation of a TCA notification and, for example, making an entry in a log table of the NE 1 concerning the threshold crossing. The network manager also uses the NMS 4 to construct the MOID of the interface, and stores the MOID in a table of a database of the NMS 4 (this can be carried out when the NMS 4 first becomes aware of the interface of the NE 1, i.e. prior to the creation of the entry in the alarm table). The network manager then uses the NMS 4 to store the MOID of the interface in the alarm table entry of the NE 1, by copying the MOID from the table of the database of the NMS 4 into an alarm owner field of the alarm table entry. This is a free format text field, and contains information concerning the identity of the entity (the network manager), which has created the alarm table entry. The MOID of the interface is added to the information in this field. Information concerning the identity of the processing capacity variable is also added to the alarm owner field of the alarm table entry.

Subsequently, when the rising threshold value set for the processing capacity variable of the interface is crossed (i.e. exceeded), the alarm table entry for the variable points to the event table entry for the variable and the events detailed therein are executed, i.e. a rising TCA notification is generated. The rising TCA notification comprises the information concerning the identity of the NE 1 and the information concerning the position of the entry in the alarm table, stored in the alarm table entry. The NE 1 sends the rising TCA notification to the NMS 4, using the SNMP, where it is received by the fault manager module 5 of the NMS. The network manager uses the NMS 4 to interrogate the rising TCA notification to read the information concerning the identity of the NE 1 and the information concerning the position of the entry in the alarm table from the rising TCA notification. The network manager then uses the NMS 4 to access the alarm table entry of the NE 1, and to read the MOID of the interface stored in the alarm table entry. The network manager then uses the NMS 4 to create an alarm notification, which contains the information in the rising TCA notification, the MOID of the interface, and further information retrieved from a database of the NMS 4. The alarm notification is displayed by the fault GUI module 6 of the NMS 4 to the manager of the network. On seeing the alarm notification, the network manager knows that the rising threshold value for the processing capacity has been crossed in the interface of the NE 1, and can take appropriate action.

## Claims

1. A method in a communications network in which a threshold crossing alert (TCA) notification is generated when a threshold set for a variable related to an object of a network element (NE) of the network is crossed, the method of identifying the object comprising:
creating an entry for the variable in an alarm table of the NE, the entry comprising information concerning the identity of the NE and information concerning the position of the entry in the alarm table,
constructing by a network management system, NMS, a managed object identity (MOID) of the object using information concerning the object and the variable held in the NMS and storing this MOID in the alarm table entry,
using the alarm table entry to generate the TCA notification when the threshold is crossed, the TCA notification comprising the information concerning the identity of the NE and the information concerning the position of the entry in the alarm table,
interrogating the TCA notification to read the information concerning the identity of the NE and the information concerning the position of the entry in the alarm table,
accessing the alarm table entry using the information read from the TCA notification, and
identifying the object by reading the MOID of the object from the alarm table entry.

2. A method according to claim 1, in which the alarm table entry comprises information concerning the identity of the variable.

3. A method according to claim 1 or claim 2, in which the alarm table entry comprises information concerning the threshold set for the variable.

4. A method according to claim 3, in which the information concerning the threshold comprises a rising threshold value, for which a rising TCA notification is generated if the variable rises above the rising threshold value.

5. A method according to claim 3 or claim 4, in which the information concerning the threshold comprises a falling threshold value, for which a falling TCA notification is generated if the variable falls below the falling threshold value.

6. A method according to any preceding claim, in which the alarm table entry comprises information concerning one or more events, which are executed when the variable crosses the threshold.

7. A method according to claim 6, in which the information concerning the or each event comprises a pointer to one or more entries for the variable in an event table of the NE, which detail the one or more events.

8. A method according to any preceding claim, further comprising creating one or more entries for the variable in an event table of the NE, the or each event table entry comprising information concerning one or more events which are executed when the variable crosses the threshold.

9. A method according to claim 8, in which the one or more events include generation of a TCA notification, and also include making an entry in a log table of the NE concerning the threshold crossing.

10. A method according to any preceding claim, in which storing the MOID of the object in the alarm table entry comprises copying the MOID from a table of a database of a NMS of the network used to create the MOID.

11. A method according to any preceding claim, in which the MOID of the object is stored in an alarm owner field of the alarm table entry.

12. A method according to claim 11, in which the alarm owner field comprises a free format text field, which allows data to be added to existing data in the field.

13. A method according to claim 12, in which the alarm owner field normally comprises information concerning the identity of the entity which has created the alarm table entry, and the MOID of the object is added to this information.

14. A method according to any preceding claim, in which the TCA notification comprises a time stamp, and one or more variables or variable bindings (varbinds).

15. A method according to claim 14, in which the vubinds comprise an alarm index, that is the index or position of the entry for the variable in the alarm: table; an alarm variable, that is the identity of the variable which has crossed the threshold; an alarm value, that is the value of the variable that has crossed the threshold; an alarm threshold, that is the value to which the threshold was set; and an alarm sample type, that is whether or not the value of the variable is an absolute or delta value.

16. A method according to any preceding claim, in which the TCA notification comprises information identifying whether it is a notification generated when a rising threshold value has been crossed or a notification generated when a falling threshold value has been crossed.

17. A method according to any preceding claim, further comprising generating a new TCA notification.

18. A method according to claim 17, in which the new TCA notification comprises the information contained in the original TCA notification plus the MOID of the object.

19. A method according to any preceding claim, further comprising generating an alarm notification using the TCA notification.

20. A method according to claim 19, in which the alarm notification comprises the information contained in the TCA notification, the MOID of the object, and information retrieved from a database of a NMS of the network.

21. A method according to claim 20, in which the alarm notification comprises information concerning an identity assigned to the alarm notification a name assigned to the object; the MOID of the object; an identity assigned to the TCA notification; a code regarding the cause of the threshold crossing; and an active description and active details when the TCA notification is generated when a rising threshold value is crossed or a clear description and details when the TCA notification is generated when a falling threshold value is crossed.

22. A method according to any preceding claim, in which the object of the telecommunications network comprises a component of the NE.

23. A method according to any preceding claim, in which the MOID comprises a hierarchical data string.

24. A method according to any preceding claim, in which the telecommunications network comprises a network management system (NMS).

25. A method according to claim 24; in which the NMS creates the entry for the variable in the alarm table of the NE, constructs the MOID of the object, stores the MOID of the object in the alarm table entry, interrogates the TCA notification, accesses the alarm table entry, and reads the MOID of the object from the alarm table entry.

26. A computer program product, when executed on a computer, in a telecommunications network in which a threshold crossing alert (TCA) notification is generated when a threshold set for a variable related to an object of a network element (NE) of the network is crossed, the computer program product identifying the object, comprising:
computer readable program means for creating an entry for the variable in an alarm table of the NE, the entry comprising information concerning the identity of the NE and information concerning the position of the entry in the alarm table,
computer readable program means for constructing a managed object identity (MOID) of the object using information concerning the object and the variable held in a Network Management System and storing this in the alarm table entry, computer readable program means for generating the TCA notification when the threshold is crossed using the alarm table entry, the TCA notification comprising the information concerning the identity of the NE and the information concerning the position of the entry in the alarm table,
computer readable program means for interrogating the TCA notification to read the information concerning the identity of the NE and the information concerning the position of the entry in the alarm table,
computer readable program means for accessing the alarm table entry using the information read from the TCA notification, and
computer readable program means for identifying the object by reading the MOID of the object from the alarm table entry.

27. A computer system comprising means to execute all steps of the method according to any of claims 1 to 25.

28. A program storage device readable by a machine and encoding a program of instruction comprising means adapted to execute the method according to any of claims 1 to 25.

## Patentansprüche

1. Verfahren in einem Telekommunikationsnetz, in dem eine Schwellenüberschreitungswarnsignal-(threshold crossing alert - TCA)-Mitteilung erzeugt wird, wenn eine Schwelle überschritten wird, die für eine Variable bezogen auf ein Objekt eines Netzelements (NE) des Netzes gesetzt ist, wobei das Verfahren zum Identifizieren des Objekts umfasst:
Erstellen eines Eintrags für die Variable in einer Alarmtabelle des NE, wobei der Eintrag eine Information über die Identität des NE und eine Information über die Position des Eintrags in der Alarmtabelle enthält,
Aufbauen durch ein Netzverwaltungssystem, NMS, einer verwalteten Objektkennung (managed object identity - MOID) des Objektes mittels Verwendung einer Information über das Objekt und die im NMS verwaltete Variable, und Abspeichern dieser MOID in dem Alarmtabelleneintrag,
Verwenden des Alarmtabelleneintrags zur Erzeugung der TCA-Mitteilung, wenn die Schwelle überschritten wird, wobei die TCA-Mitteilung die Information über die Kennung des NE und die Information über die Position des Eintrags in der Alarmtabelle enthält,
Abfragen der TCA-Mitteilung zum Lesen der Information über die Kennung des NE und der Information über die Position des Eintrags in der Alarmtabelle, Zugreifen auf den Alarmtabelleneintrag mittels Verwendung der aus der TCA-Mitteilung ausgelesenen Information, und
Identifizieren des Objekts durch Lesen der MOID des Objekts aus dem Alarmtabelleneintrag.

2. Verfahren nach Anspruch 1, wobei der Alarmtabelleneintrag eine Information über die Kennung der Variablen umfasst.

3. Verfahren nach Anspruch 1 oder 2, wobei der Alarmtabelleneintrag eine Information über die für die Variable gesetzte Schwelle umfasst.

4. Verfahren nach Anspruch 3, wobei die Information über die Schwelle einen steigenden Schwellenwert umfasst, für den eine steigende TCA-Mitteilung erzeugt wird, wenn die Variable über den steigenden Schwellenwert steigt.

5. Verfahren nach Anspruch 3 oder 4, wobei die Information über die Schwelle einen sinkenden Schwellenwert umfasst, für den eine sinkende TCA-Mitteilung erzeugt wird, wenn die Variable unterhalb des sinkenden Schwellenwerts sinkt.

6. Verfahren nach einem der vorstehenden Ansprüche, wobei der Alarmtabelleneintrag eine Information über ein oder mehrere Ereignisse umfasst, die ausgeführt werden, wenn die Variable die Schwelle überschreitet.

7. Verfahren nach Anspruch 6, wobei die Information über das oder jedes Ereignis einen Zeiger auf einen oder mehrere Einträge für die Variable in einer Ereignistabelle des NE umfasst, in denen das eine oder mehrere Ereignisse im einzelnen beschrieben ist/sind.

8. Verfahren nach einem der vorstehenden Ansprüche, weiterhin umfassend das Erstellen eines oder mehrerer Einträge für die Variable in einer Ereignistabelle des NE, wobei der oder jeder Ereignistabelleneintrag eine Information über ein oder mehrere Ereignisse umfasst, die ausgeführt werden, wenn die Variable die Schwelle überschreitet.

9. Verfahren nach Anspruch 8, wobei das eine oder mehrere Ereignisse die Erzeugung einer TCA-Mitteilung sowie das Vornehmen eines Eintrags in einer Protokolltabelle des NE über das Überschreiten der Schwelle umfassen.

10. Verfahren nach einem der vorstehenden Ansprüche, wobei das Speichern der MOID des Objekts in dem Alarmtabelleneintrag das Kopieren der MOID aus einer Tabelle einer Datenbank eines NMS des Netzes, das zur Erstellung der MOID verwendet wird, umfasst.

11. Verfahren nach einem der vorstehenden Ansprüche, wobei die MOID des Objekts in einem Alarmeigentümerfeld des Alarmtabelleneintrags gespeichert wird.

12. Verfahren nach Anspruch 11, wobei das Alarmeigentümerfeld ein nicht formatiertes Textfeld umfasst, das das Hinzufügen von Daten zu existierenden Daten in dem Feld erlaubt.

13. Verfahren nach Anspruch 12, wobei das Alarmeigentümerfeld normalerweise eine Information über die Kennung der Einrichtung umfasst, die den Alarmtabelleneintrag erstellt hat, und die MOID des Objekts dieser Information hinzugefügt wird.

14. Verfahren nach einem der vorstehenden Ansprüche, wobei die TCA-Mitteilung einen Zeitstempel sowie eine oder mehrere Variablen oder Variablenbindungen (Varbinds) umfasst.

15. Verfahren nach Anspruch 14, wobei die Varbinds einen Alarmindex umfassen, d.h. den Index oder die Position des Eintrags für die Variable in der Alarmtabelle; eine Alarmvariable, d.h. die Kennung der Variablen, die die Schwelle überschritten hat; einen Alarmwert, d.h. der Wert der Variablen, die die Schwelle überschritten hat; eine Alarmschwelle, d.h. der Wert, auf den die Schwelle gesetzt wurde; und einen Alarm-Prüfwert, d.h., ob der Wert der Variablen ein Absolut- oder Deltawert ist oder nicht.

16. Verfahren nach einem der vorstehenden Ansprüche, wobei die TCA-Mitteilung eine Information zum Identifizieren umfasst, ob es sich um eine Mitteilung handelt, die erzeugt wird, wenn ein steigender Schwellenwert überschritten wurde, oder um eine Mitteilung, die erzeugt wird, wenn ein sinkender Schwellenwert überschritten wurde.

17. Verfahren nach einem der vorstehenden Ansprüche, weiterhin umfassend die Erzeugung einer neuen TCA-Mitteilung.

18. Verfahren nach Anspruch 17, wobei die neue TCA-Mitteilung die Information umfasst, die in der Original-TCA-Mitteilung enthalten ist, plus der MOID des Objekts.

19. Verfahren nach einem der vorstehenden Ansprüche, weiterhin umfassend die Erzeugung einer Alarmmitteilung mittels Verwendung der TCA-Mitteilung.

20. Verfahren nach Anspruch 19, wobei die Alarmmitteilung die in der TCA-Mitteilung enthaltene Information, die MOID des Objekts und eine Information, die von einer Datenbank eines NMS des Netzes abgerufen wurde, umfasst.

21. Verfahren nach Anspruch 20, wobei die Alarmmitteilung eine Information über eine Kennung umfasst, die der Alarmmitteilung zugeordnet wurde; einen Namen, der dem Objekt zugeordnet wurde; die MOID des Objekts; eine Kennung, die der TCA-Mitteilung zugeordnet wurde; einen Code betreffend die Ursache des Schwellenüberschreitens; und eine aktive Beschreibung und aktive Details, wenn die TCA-Mitteilung erzeugt wird, wenn ein steigender Schwellenwert überschritten wird, oder eine deutliche Beschreibung und Details, wenn die TCA-Mitteilung erzeugt wird, wenn ein sinkender Schwellenwert überschritten wird.

22. Verfahren nach einem der vorstehenden Ansprüche, wobei das Objekt des Telekommunikationsnetzes eine Komponente des NE umfasst.

23. Verfahren nach einem der vorstehenden Ansprüche, wobei die MOID eine hierarchische Datenkette umfasst.

24. Verfahren nach einem der vorstehenden Ansprüche, wobei das Telekommunikationsnetz ein Netzverwaltungssystem (NMS) umfasst.

25. Verfahren nach Anspruch 24, wobei das NMS den Eintrag für die Variable in der Alarmtabelle des NE erstellt, die MOID des Objekts aufbaut, die MOID des Objekts in dem Alarmtabelleneintrag speichert, die TCA-Mitteilung abfragt, auf den Alarmtabelleneintrag zugreift und die MOID des Objekts aus dem Alarmtabelleneintrag ausliest.

26. Computerprogrammprodukt zur Ausführung auf einem Computer in einem Telekommunikationsnetz, in dem eine Schwellenüberschreitungswarnsignal-(TCA)-Mitteilung erzeugt wird, wenn eine Schwelle überschritten wird, die für eine Variable bezogen auf ein Objekt eines Netzelements (NE) des Netzes gesetzt ist, wobei das Computerprogrammprodukt, das das Objekt identifiziert, umfasst:
computerlesbare Programmmittel zum Erstellen eines Eintrags für die Variable in einer Alarmtabelle des NE, wobei der Eintrag eine Information über die Identität des NE und eine Information über die Position des Eintrags in der Alarmtabelle enthält,
computerlesbare Programmmittel zum Aufbauen einer verwalteten Objektkennung (MOID) des Objektes mittels Verwendung einer Information über das Objekt und die in einem Netzverwaltungssystem verwaltete Variable, und Abspeichern derselben in dem Alarmtabelleneintrag,
computerlesbare Programmmittel zur Erzeugung der TCA-Mitteilung, wenn die Schwelle überschritten wird, mittels Verwendung des Alarmtabelleneintrags, wobei die TCA-Mitteilung die Information über die Kennung des NE und die Information über die Position des Eintrags in der Alarmtabelle enthält, computerlesbare Programmmittel zum Abfragen der TCA-Mitteilung zum Lesen der Information über die Kennung des NE und der Information über die Position des Eintrags in der Alarmtabelle,
computerlesbare Programmmittel zum Zugreifen auf den Alarmtabelleneintrag mittels Verwendung der aus der TCA-Mitteilung ausgelesenen Information, und
computerlesbare Programmmittel zum Identifizieren des Objekts durch Lesen der MOID des Objekts aus dem Alarmtabelleneintrag.

27. Computersystem umfassend Mittel zum Ausführen sämtlicher Verfahrensschritte nach einem der Ansprüche 1 bis 25.

28. Programmspeichervorrichtung, die maschinenlesbar ist und ein Programm von Instruktionen kodiert, umfassend Mittel, die angepasst sind, das Verfahren nach einem der Ansprüche 1 bis 25 auszuführen.

## Revendications

1. Procédé dans un réseau de télécommunication, dans lequel une notification d'alerte de dépassement de seuil (TCA) est générée lorsqu'un seuil déterminé pour une variable relative à un objet d'un élément de réseau (NE) du réseau est dépassé, le procédé d'identification de l'objet consistant à :
créer une entrée pour la variable dans une table d'alerte de l'élément de réseau, l'entrée comprenant une information concernant l'identité de l'élément de réseau et une information concernant la position de l'entrée dans la table d'alerte,
construire par un système de gestion du réseau, NMS, une identité d'objet gérée (MOID) de l'objet en utilisant les informations concernant l'objet et la variable contenues dans le NMS et en mémorisant cette MOID dans l'entrée de table d'alerte,
utiliser l'entrée de table d'alerte afin de générer la notification TCA lorsque le seuil est dépassé, le notification TCA comprenant l'information concernant l'identité de l'élément de réseau et l'information concernant la position de l'entrée dans la table d'alerte,
interroger la notification TCA afin de lire l'information concernant l'identité de l'élément de réseau et l'information concernant la position de l'entrée dans la table d'alarme,
accéder l'entrée de table d'alerte en utilisant l'information lue dans la notification TCA, et
identifier l'objet en lisant la MOID de l'objet dans l'entrée de table d'alerte.

2. Procédé selon la revendication 1, dans lequel l'entrée de table d'alerte comprend une information concernant l'identité de la variable.

3. Procédé selon la revendication 1 ou 2, dans lequel l'entré de table d'alerte comprend une information concernant le seuil déterminé pour la variable.

4. Procédé selon la revendication 3, dans lequel l'information concernant le seuil comprend une valeur de seuil croissante, pour laquelle une notification TCA croissante est générée si la variable s'élève au dessus de la valeur de seuil croissante.

5. Procédé selon la revendication 3 ou 4, dans lequel l'information concernant le seuil comprend une valeur de seuil décroissante, pour laquelle une notification TCA décroissante est générée si la variable baisse en dessous de la valeur de seuil décroissante.

6. Procédé selon l'une quelconque des revendications précédentes, dans lequel l'entrée de table d'alerte comprend une information concernant un ou plusieurs évènements, qui sont exécutés lorsque la variable dépasse le seuil.

7. Procédé selon la revendication 6, dans lequel l'information concernant le ou chaque évènement comprend un pointeur vers une ou plusieurs entrées pour la variable dans une table d'évènement de l'élément de réseau, laquelle détaille le ou les évènements.

8. Procédé selon l'une quelconque des revendications précédentes, consistant en outre à créer une ou plusieurs entrées pour la variable dans une table d'évènement de l'élément de réseau, la ou chaque entrée de table d'évènement comprenant des informations concernant ou plusieurs évènements qui sont exécutés lorsque la variable dépasse le seuil.

9. Procédé selon la revendication 8, dans lequel le ou les évènements incluent la génération d'une notification TCA et incluent également l'inscription d'une entrée dans un table de journalisation de l'élément de réseau concernant le dépassement de seuil.

10. Procédé selon l'une quelconque des revendications précédentes, dans lequel la mémorisation de la MOID de l'objet dans l'entrée de table d'alerte consiste à copier la MOID d'une table d'une base de données d'un système de gestion de réseau du réseau utilisé afin de créer la MOID.

11. Procédé selon l'une quelconque des revendications précédentes, dans lequel la MOID de l'objet est mémorisée dans un champ propriétaire d'alerte de l'entrée de table d'alerte.

12. Procédé selon la revendication 11, dans lequel le champ propriétaire d'alerte comprend un champ de texte à format libre, qui permet d'ajouter des données aux données existantes dans le champ.

13. Procédé selon la revendication 12, dans lequel le champ propriétaire d'alerte comprend normalement une information concernant l'identité de l'entité qui a créé l'entrée de table d'alerte et la MOID de l'objet est ajoutée à cette information.

14. Procédé selon l'une quelconque des revendications précédentes, dans lequel la notification TCA comprend un marqueur temporel et une ou plusieurs variables ou corrélations de variables (varbinds).

15. Procédé selon la revendication 14, dans lequel les corrélations de variables comprennent un index d'alerte, c'est à dire l'index ou la position de l'entrée relative à la variable dans la table d'alerte ; une variable d'alerte, c'est à dire l'identité de la variable qui a dépassé le seuil ; une valeur d'alerte, c'est à dire la valeur de la variable qui a dépassé le seuil ; un seuil d'alerte, c'est à dire la valeur à laquelle le seuil a été déterminé ; et un type d'échantillon d'alerte, c'est à dire si ou non la valeur de la variable est une valeur absolue ou delta.

16. Procédé selon l'une quelconque des revendications précédentes, dans lequel la notification TCA comprend une information identifiant s'il s'agit d'une notification générée lorsqu'une valeur de seuil croissante a été dépassée ou d'une notification générée lorsqu'une valeur de seuil décroissante a été dépassée.

17. Procédé selon l'une quelconque des revendications précédentes, consistant en outre à générer une nouvelle notification TCA.

18. Procédé selon la revendication 17, dans lequel la nouvelle notification TCA comprend l'information contenue dans la notification TCA d'origine plus la MOID de l'objet.

19. Procédé selon l'une quelconque des revendications précédentes, consistant en outre à générer une notification d'alerte en utilisant la notification TCA.

20. Procédé selon la revendication 19, dans lequel la notification d'alerte comprend l'information contenue dans la notification TCA, la MOID de l'objet et l'information reçue d'une base de données d'un système de gestion de réseau du réseau.

21. Procédé selon la revendication 20, dans lequel la notification d'alerte comprend une information concernant une identité assignée à la notification d'alerte ; un nom assigné à l'objet ; la MOID de l'objet ; une identité assignée à la notification TCA ; un code identifiant la cause du dépassement de seuil ; et une description active et des détails actifs lorsque la notification TCA est générée quand une valeur de seuil croissante est dépassée ou une description claire et des détails clairs lorsque la notification TCA est générée quand une valeur de seuil décroissante est dépassée.

22. Procédé selon l'une quelconque des revendications précédentes, dans lequel l'objet du réseau de télécommunication comprend un composant de l'élément de réseau.

23. Procédé selon l'une quelconque des revendications précédentes, dans lequel la MOID comprend une chaîne de données hiérarchique.

24. Procédé selon l'une quelconque des revendications précédentes, dans lequel le réseau de télécommunication comprend un système de gestion de réseau (NMS).

25. Procédé selon la revendication 24, dans lequel le NMS crée l'entrée de la variable dans la table d'alerte de l'élément de réseau, construit la MOID de l'objet, mémorise la MOID de l'objet dans l'entrée de table d'alerte, interroge la notification TCA, accède à l'entrée de table d'alerte et lit la MOID de l'objet dans l'entrée de table d'alerte.

26. Produit de programme informatique, lorsqu'il est exécuté sur un ordinateur, dans un réseau de télécommunication dans lequel une notification d'alerte de dépassement de seuil (TCA) est générée lorsqu'un seuil déterminé pour une variable relative à un objet d'un élément de réseau (NE) du réseau est dépassé, le produit de programme informatique identifiant l'objet, comprenant :
un moyen de programme pouvant être lu par un ordinateur pour créer une entrée pour la variable dans une table d'alerte de l'élément de réseau, l'entrée comprenant une information concernant l'identité de l'élément de réseau et une information concernant la position de l'entrée dans la table d'alerte,
un moyen de programme pouvant être lu par un ordinateur pour construire une identité d'objet gérée (MOID) de l'objet en utilisant l'information concernant l'objet et la variable contenue dans un système de gestion de réseau et en mémorisant celle-ci dans l'entrée de table d'alerte,
un moyen de programme pouvant être lu par un ordinateur pour générer la notification TCA lorsque le seuil est dépassé en utilisant l'entrée de table d'alerte, la notification TCA comprenant l'information concernant l'identité de l'élément de réseau et l'information concernant la position de l'entrée dans la table d'alerte,
un moyen de programme pouvant être lu par un ordinateur pour interroger la notification TCA afin de lire l'information concernant l'identité de l'élément de réseau et l'information concernant la position de l'entrée dans la table d'alerte,
un moyen de programme pouvant être lu par un ordinateur pour accéder à l'entrée de table d'alerte en utilisant l'information lue dans la notification TCA, et
un moyen de programme pouvant être lu par un ordinateur pour identifier l'objet en lisant la MOID de l'objet dans l'entrée de table d'alerte.

27. Système informatique comprenant des moyens pour exécuter les étapes de procédé selon l'une quelconque des revendications 1 à 25.

28. Dispositif de stockage informatique pouvant être lu par une machine et codant un programme d'instructions comprenant des moyens adaptés afin d'exécuter le procédé selon l'une quelconque des revendications 1 à 25.
